# EUROPÄISCHE PATENTSCHRIFT

(11) **EP 2 871 423 B1**
(45) Veröffentlichungstag und Bekanntmachung des Hinweises auf die Patenterteilung: **03.05.2017**
(21) Anmeldenummer: 13192028.2
(22) Anmeldetag: 07.11.2013
(51) Int. Cl.: F24D 3/12, F24D 19/10, G05D 23/19, F28F 27/02

(54) **Regelungsverfahren für ein Heizungs- und/oder Kühlsystem mit zumindest einen Lastkreis sowie Verteilereinrichtung für ein Heizungs- und/oder Kühlsystem**
Method for controlling a heating and/or cooling system with at least one load circuit and distribution device for a heating and/or cooling system
Procédé de régulation pour un système de chauffage et/ou de refroidissement comprenant au moins un circuit de charge et dispositif de distribution pour un système de chauffage et/ou de refroidissement

(43) Veröffentlichungstag der Anmeldung: 13.05.2015
(73) Patentinhaber: Grundfos Holding A/S, 8850 Bjerringbro (DK)
(72) Erfinder: Sørensen, Erik, Baasch, 8850 Bjerringbro (DK); Clausen, Martin, 8850 Bjerringbro (DK)
(74) Vertreter: Patentanwälte Vollmann & Hemmer

(56) Entgegenhaltungen:
- EP-A1- 1 355 212
- EP-A1- 2 103 890
- EP-A1- 2 442 052
- EP-A2- 0 729 086
- EP-A2- 0 730 213
- WO-A1-03/038343
- WO-A1-2004/083733
- DE-A1- 4 312 800
- DE-A1-102007 037 116

## Beschreibung

Es sind Heizungs- und Kühlsysteme bekannt, welche zumindest einen Lastkreis aufweisen, durch welchen ein Fluid als Wärmeträger strömt. Dies kann beispielsweise Wasser sein. Ein solches System kann beispielsweise als Heizungsanlage in einem Gebäude vorgesehen sein, wobei bevorzugt mehrere Lastkreise vorhanden sind. Die Lastkreise werden in bekannter Weise in Abhängigkeit einer Raumtemperatur ein- und ausgeschaltet, was beispielsweise über Raumthermostate geschehen kann. So kann im Fall eines Heizungssystems der Lastkreis bei Unterschreiten einer Solltemperatur eingeschaltet und bei Überschreiten bzw. Erreichen einer Solltemperatur der Lastkreis ausgeschaltet werden.

DE 10 2007 037 116 A1 offenbart eine Fußbodenheizungsanlage, welche eine Anpassung der Vorlauftemperatur für die Heizkreise ermöglicht. Dies erfolgt in vorbestimmten Zeitintervallen. Nach einer festgelegten Zeit werden die Fußbodenheizungskreise abgeschaltet.

Es ist Aufgabe der Erfindung, ein verbessertes Regelungsverfahren für ein solches Heizungs- und/oder Kühlsystem bereitzustellen, welches es ermöglicht, den Energieverbrauch zu reduzieren und den Komfort zu verbessern. Diese Aufgabe wird durch ein Regelungsverfahren mit den in Anspruch 1 angegebenen Merkmalen sowie durch eine Verteiler-Einrichtung mit den in Anspruch 12 genannten Merkmalen gelöst. Bevorzugte Ausführungsformen ergeben sich aus den Unteransprüchen, der nachfolgenden Beschreibung sowie den beigefügten Figuren.

Das erfindungsgemäße Regelungsverfahren ist für ein Heizungs- und/oder Kühlsystem vorgesehen, welches ein Fluid als Wärmeträger verwendet. Das Fluid wird dabei bevorzugt von einer Umwälzpumpe durch zumindest einen Lastkreis gefördert, wobei der Lastkreis sich durch den zu beheizenden oder zu kühlenden Raum erstreckt, beispielsweise bei einer Fußbodenheizung im Boden oder beispielsweise durch Heizkörper oder andere geeignete Wärmetauscher in dem Raum. Der Lastkreis wird in Abhängigkeit von einer Raumtemperatur in einem von dem Lastkreis zu temperierenden, d. h. zu heizenden oder zu kühlenden Raum ein- und ausgeschaltet. D. h. wenn eine bestimmte Solltemperatur durch Heizen oder Kühlen erreicht wird, wird der Lastkreis beispielsweise durch Schließen eines Ventils oder Abschalten einer Förderpumpe geschlossen. Umgekehrt wird der Lastkreis bei Abweichung von einer Solltemperatur durch Öffnen eines Ventils oder Einschalten einer Förderpumpe eingeschaltet. Um die Menge der dem zu temperierenden Raum zugeführten Wärme (im Falle eines Heizungssystems) oder der aus dem Raum abzuführenden Wärme (im Form eines Kühlsystems) optimal an den Bedarf anpassen zu können, ist es erfindungsgemäß vorgesehen, eine Vorlauftemperatur des dem zumindest einen Lastkreis zugeführten Fluids in Abhängigkeit der Einschaltdauer, d. h. einer relativen Einschaltdauer des zumindest einen Lastkreises einzustellen. D. h. die Vorlauftemperatur wird in Abhängigkeit der Einschaltdauer verändert, d. h. erhöht oder verringert. Dies ermöglicht es, bevorzugt möglichst lange relative Einschaltdauern des Lastkreises zu ermöglichen, wodurch eine gleichmäßige Wärmezu- oder Abfuhr in bzw. aus dem zu temperierenden Raum ermöglicht wird. Dies erhöht den Komfort und verringert gleichzeitig den Energieverbrauch.

Bei der Einschaltdauer handelt es sich um eine relative Einschaltdauer, d. h. das Verhältnis der Einschaltdauer bzw. -zeit zu der Zeitspanne zwischen einem Einschalten des Lastkreises und einem darauf folgenden erneuten Einschalten des Lastkreises, d. h. bei der Einschaltdauer handelt es sich bevorzugt um den Lastzyklus (load-cycle) bzw. das Einschaltverhältnis, d. h. das Verhältnis zwischen Einschaltzeit und Zykluszeit. Es ist zu verstehen, dass im Sinne der Erfindung die Betrachtung der relativen Ausschaltdauer anstelle der relativen Einschaltdauer als Äquivalent zur Betrachtung der relativen Einschaltdauer angesehen wird. Die relative Ausschaltdauer ist entsprechend die Ausschaltzeit bezogen auf die Zyklusdauer, d. h. die Zeitspanne zwischen einem Einschalten des Lastkreises und einem darauffolgenden erneuten Einschalten bzw. zwischen einem Ausschalten des Lastkreises und einem darauffolgenden erneuten Ausschalten des Lastkreises. Da ein Überschreiten einer vorgegebenen relativen Einschaltdauer zu einer Veränderung der Vorlauftemperatur führt, führt entsprechend ein Unterschreiten der relativen Ausschaltdauer zu einer entsprechenden Veränderung der Vorlauftemperatur. D. h. relative Einschaltdauer und relative Ausschaltdauer sind hier austauschbar.

Gemäß einer bevorzugten Ausführungsform der Erfindung wird der Lastkreis zum Heizen eines Raumes verwendet und die Vorlauftemperatur wird erhöht, wenn die relative Einschaltdauer einen vorgegebenen Grenzwert übersteigt und/oder die Vorlauftemperatur wird gesenkt, wenn die relative Einschaltdauer einen vorgegebenen Grenzwert unterschreitet. Bei den Grenzwerten der relativen Einschaltdauer kann es sich um einen einzigen Grenzwert handeln oder um einen Bereich mit einer unteren und einer oberen Grenze handeln, wobei beim Erreichen der oberen Grenze bzw. Übersteigen der oberen Grenze die Vorlauftemperatur erhöht wird und bei Erreichen bzw. Unterschreiten der unteren Grenze die Vorlauftemperatur gesenkt wird.

Entsprechend ist das Regelungsverfahren bevorzugt für ein Kühlsystem so ausgestaltet, dass der Lastkreis zum Kühlen eines Raumes verwendet wird und die Vorlauftemperatur gesenkt wird, wenn die relative Einschaltdauer einen vorgegebenen Grenzwert übersteigt und/oder die Vorlauftemperatur erhöht wird, wenn die relative Einschaltdauer einen vorgegebenen Grenzwert unterschreitet. Dabei kann der Grenzwert auch hier ein einzelner Grenzwert sein oder von oberen und unteren Grenzen eines Soll-Bereiches gebildet werden, wobei die Vorlauftemperatur bei Erreichen bzw. Überschreiten der oberen Grenze gesenkt und bei Erreichen bzw. Unterschreiten der unteren Grenze erhöht wird.

Besonders bevorzugt wird bei Unter- oder Überschreiten des vorgegebenen Grenzwertes die Vorlauftemperatur um einen proportionalen Betrag verändert. D. h. die Vorlauftemperatur wird nicht um einen festen Betrag verändert, sondern um einen Betrag, der davon abhängt, wie stark der Grenzwert für die relative Einschaltdauer über- oder unterschritten wird. D. h. bei einem großen Überschreiten des Grenzwertes wird die Vorlauftemperatur um ein entsprechend größeres Maß verändert. Es ist jedoch zu verstehen, dass alternativ die Vorlauftemperatur auch in festen Schritten erhöht und/oder gesenkt werden kann, unabhängig davon, wie groß die Abweichung der Dauer von den genannten Grenzen ist.

Gemäß einer bevorzugten Ausführungsform wird zum Einstellen der Vorlauftemperatur eine Mischeinrichtung verwendet, in welcher dem zumindest einen Lastkreis zugeführtes Fluid mit Fluid aus einem Rücklauf des zumindest einen Lastkreises gemischt wird. Solche Mischeinrichtungen sind beispielsweise bei Fußbodenheizungen üblich, in welchen eine hohe Vorlauftemperatur durch Zumischen von Fluid, beispielsweise Wasser aus dem Rücklauf reduziert wird. Umgekehrt könnte in einem Kühlsystem die Vorlauftemperatur durch Zumischen von wärmeren Fluid aus dem Rücklauf erhöht werden. Durch Änderung des Zumischverhältnisses kann die Vorlauftemperatur eingestellt bzw. angepasst werden.

Bevorzugt wird das erfindungsgemäße Regelverfahren für mehrere Lastkreise verwendet. D. h. bevorzugt sind mehrere Lastkreise vorhanden und zur Einstellung der Vorlauftemperatur eines den Lastkreisen gemeinsam zugeführten Fluids wird die relative Einschaltdauer desjenigen Lastkreises zugrunde gelegt, welcher die größten relativen Einschaltdauern aufweist. Auch dabei handelt es sich um die relativen Einschaltdauern, wie sie oben beschrieben wurden, d. h. um die Verhältnisse zwischen Einschaltzeit und Gesamtzykluszeit. Derjenige Lastkreis, welcher die längste relative Einschaltdauer aufweist, weist den größten Heiz- bzw. Kühlbedarf auf. Insofern ist es bevorzugt, die Vorlauftemperatur an diesen Lastkreis anzupassen, sodass diesem Lastkreis die maximale Heiz- bzw. Kühlleistung durch Anpassung der Vorlauftemperatur zugeführt wird. In den anderen Räumen, welche von den anderen Lastkreisen gekühlt, bzw. geheizt werden, erfolgt die Anpassung dann entsprechend durch Verkürzung der Einschaltdauer, was den bekannten Steuer- bzw. Regelverfahren entspricht.

Besonders bevorzugt wird in einem von dem Lastkreis zu temperierenden Raum die Raumtemperatur erfasst und, wenn die Raumtemperatur einen Temperatur-Sollwert erreicht, wird der Lastkreis durch Unterbrechung des Volumenstromes, beispielsweise durch Schließen eines Ventils oder Abschalten einer Pumpe, ausgeschaltet. Entsprechend wird der Lastkreis bei Abweichung von dem Temperatur-Sollwert wieder eingeschaltet. Bei dem Temperatur-Sollwert kann es sich um einen festen Wert oder um eine Temperaturspanne handeln, wobei die Temperaturspanne einen oberen und einen unteren Grenzwert aufweist. In einem Heizungssystem kann der Lastkreis bei Erreichen des oberen Grenzwertes ausgeschaltet und bei Erreichen des unteren Grenzwertes eingeschaltet werden. In einem Kühlsystem funktioniert dies dann bevorzugt entsprechend genau umgekehrt, d. h. der Lastkreis wird bei Erreichen des oberen Temperaturwertes eingeschaltet und bei Erreichen des unteren Temperaturwertes wieder ausgeschaltet. Für den Fall, dass mehrere Lastkreise vorgesehen sind, werden bevorzugt alle Lastkreise in dieser Weise ein- und ausgeschaltet, d. h. in jedem Raum, welcher von einem Lastkreis temperiert wird, wird die Raumtemperatur erfasst und der zugehörige Lastkreis entsprechend ein- und ausgeschaltet. Dies entspricht dem üblichen Betrieb von Fußbodenheizungen.

Gemäß einer weiteren bevorzugten Ausführungsform der Erfindung wird eine Eingangstemperatur des Fluids an einem Eingang des Lastkreises und einer Austrittstemperatur an einem Ausgang des Lastkreises erfasst und es wird eine Temperaturdifferenz zwischen der Eingangstemperatur und der Ausgangstemperatur bestimmt und ein Volumenstrom des Fluids durch diesen Lastkreis in Abhängigkeit der Temperaturdifferenz eingestellt. Die Einstellung des Volumenstromes kann z. B. über ein Regulierventil erfolgen. Durch dieses Regelverfahren wird es möglich, die Energiemenge, welche dem Lastkreis zugeführt bzw. im Falle eines Kühlsystems durch den Lastkreis abgeführt wird, an den Heiz- bzw. Kühlbedarf eines von dem Lastkreis zu temperierenden Raumes genau anzupassen. D. h. durch den Lastkreis fließt kein konstanter Volumenstrom, wie es in bekannten Systemen üblich ist, vielmehr wird der Volumenstrom an den Wärme- bzw. Kühlbedarf in Abhängigkeit der erfassten Temperaturdifferenz angepasst. Dadurch kann eine Reduzierung des Energieverbrauches und eine komfortablere Temperierung eines Raumes erreicht werden.

Gemäß einer weiteren bevorzugten Ausführungsform dient das Regelungsverfahren zur Regelung mehrerer Lastkreise, wobei für die mehreren Lastkreise eine gemeinsame Umwälzpumpe zum Fördern des Fluids durch die Lastkreise vorhanden ist, wobei bevorzugt die Drehzahl der Umwälzpumpe derart geregelt wird, dass ein Differenzdruck über der Umwälzpumpe einem vorgegebenen Druckdifferenz-Sollwert entspricht. Der Differenzdruck über der Pumpe, d. h. zwischen Ein- und Ausgang der Pumpe entspricht dabei dem Differenzdruck zwischen Ein- und Ausgang des Lastkreises bzw. der Lastkreise. Die Differenzdruckregelung kann durch Drehzahlregelung der Umwälzpumpe erfolgen. Durch diese Differenzdruckregelung wird erreicht, dass den Lastkreisen das Fluid mit einem geregelten, vorzugsweise konstantem Druck zugeführt wird. Dabei kann der Druckdifferenz-Sollwert ggf. verschiedenen Betriebszuständen angepasst werden, d. h. verändert werden.

Besonders bevorzugt wird der Druckdifferenz-Sollwert für den Differenzdruck über der Umwälzpumpe in Abhängigkeit des Öffnungsgrades zumindest eines Regulierventils zum Einstellen des Volumenstroms in den Lastkreisen eingestellt. Bevorzugt sind Regulierventile zum Einstellen des Volumenstromes in den Lastkreisen vorgesehen, wobei für jeden Lastkreis ein eigenes Regulierventil vorgesehen ist. Dadurch, dass der Druckdifferenz-Sollwert, auf welchen der Differenzdruck zwischen Eingangsseite und Ausgangsseite der Umwälzpumpe geregelt wird, an den Öffnungsgrad zumindest eines Regulierventils angepasst wird, wird erreicht, dass der Fluiddruck des den Lastkreisen zugeführten Fluids an den Öffnungsgrad der Regulierventile angepasst wird, d. h. insbesondere kann bei stärker geöffneten Ventilen der Druck erhöht und bei weiter geschlossenen Regulierventilen der Druck verringert werden.

Besonders bevorzugt wird zur Einstellung des Druckdifferenz-Sollwertes für den Differenzdruck über der Umwälzpumpe dasjenige Regulierventil betrachtet, welches am weitesten geöffnet ist. D. h. wenn mehrere Lastkreise mit mehreren Regulierventilen vorhanden sind, wird zur Einstellung des Druckdifferenz-Sollwertes bevorzugt nur ein Regulierventil betrachtet, wobei der Druckdifferenz-Sollwert in Abhängigkeit des Öffnungsgrades dieses Regulierventils eingestellt wird. Dabei ist es zweckmäßig, dasjenige Regulierventil zu betrachten, welches am weitesten geöffnet ist, da dies dem Lastkreis zugehörig ist, welches den größten Heiz- bzw. größten Kühlbedarf aufweist, sodass sichergestellt wird, dass die Heiz- bzw. Kühlleistung für diesen Lastkreis ausreichend ist.

Zur Einstellung des Druckdifferenz-Sollwertes wird der Öffnungsgrad des zugrundegelegten Regulierventils mit einem Soll-Öffnungsgrad verglichen und bei Überschreiten des Soll-Öffnungsgrades wird der Druckdifferenz-Sollwert erhöht, während er bei Unterschreiten des Soll-Öffnungsgrades der Druckdifferenz-Sollwert reduziert wird. Der Soll-Öffnungsgrad kann ein fester Wert oder ein Öffnungsgradbereich sein, wobei bei Unterschreiten der unteren Grenze des Bereiches der Druckdifferenz-Sollwert reduziert und bei Überschreiten der oberen Grenze der Druckdifferenz-Sollwert entsprechend erhöht wird. Der Druckdifferenz-Sollwert kann dabei in festen Schritten oder aber proportional zur Änderung des Öffnungsgrades verändert werden.

Idealerweise weist das Regelungsverfahren mehrere Regelkreise auf, wie sie vorangehend beschrieben wurde. Ein erster Regelkreis regelt die Vorlauftemperatur des zumindest einen Lastkreises in der oben beschriebenen Weise in Abhängigkeit der Einschaltdauer des zumindest einen Lastkreises. Ein zweiter Regelkreis regelt den Volumenstrom durch den Lastkreis in Abhängigkeit der Ein- und Austrittstemperaturen in der oben genannten Weise. Ein dritter Regelkreis regelt den Differenzdruck über der Umwälzpumpe, d. h. die Druckdifferenz zwischen Aus- und Eingangsseite des Lastkreises in der oben genannten Weise. Darüber hinaus können ein vierter Regelkreis den Druckdifferenz-Sollwert in der oben genannten Weise in Abhängigkeit des Öffnungsgrades eines Regulierventils sowie weitere Regelkreise die Raumtemperatur durch Ein- und Ausschalten der Lastkreise sowie die Vorlauftemperatur auf den eingestellten Vorlauftemperatur-Sollwert regeln. Diese Regelkreise sind einander überlagert und die entsprechenden Regelungen laufen bevorzugt gleichzeitig kontinuierlich ab. Dabei erfolgen die Regelungen bevorzugt mit unterschiedlicher Geschwindigkeit bzw. unterschiedlicher Trägheit. Dabei ist der schnellste Regelkreis vorzugsweise derjenige, welcher die Druckregelung der Umwälzpumpe durchführt. Dieser Regelkreis stellt die Drehzahl der Pumpe so ein, dass der gewünschte Druckdifferenz-Sollwert erreicht wird. Langsamer als dieser Regelkreis ist der nächste Regelkreis ausgebildet, welcher die Vorlauftemperatur regelt, d. h. die Vorlauftemperatur auf den gewählten Vorlauftemperatur-Sollwert regelt. Der nächstlangsamere Regelkreis ist bevorzugt der Regelkreis, welcher den Volumenstrom durch den Lastkreis in Abhängigkeit der Temperaturdifferenz einstellt, wie es oben beschrieben wurde. Diese Regelung ist für den jeweiligen Lastkreis zweckmäßigerweise nur dann aktiv, wenn dieser eingeschaltet ist. Noch langsamer ist der Regelkreis, welcher den Druckdifferenz-Sollwert in Abhängigkeit des Öffnungsgrades des Regulierventils einstellt. Diese Regelung erfolgt so langsam, dass sie bevorzugt nicht mit der Volumenstromregelung in Wechselwirkung tritt. Der nächst langsamere Regelkreis ist der Regelkreis, welcher die Raumtemperatur durch Ein- und Ausschalten der Lastkreise regelt. Der langsamste Regelkreis ist derjenige Regelkreis, welcher den Vorlauftemperatur-Sollwert einstellt bzw. regelt.

Gegenstand der Erfindung ist neben dem vorangehend beschriebenen Regelungsverfahren darüber hinaus eine Verteiler-Einrichtung für ein Heizungs- und/oder Kühlsystem mit zumindest einen Lastkreis, beispielsweise eine Verteilereinrichtung für ein Fußbodenheizungssystem. Die erfindungsgemäße Verteilereinrichtung weist zumindest eine Umwälzpumpe zum Fördern eines Fluids als Wärmeträger durch den zumindest einen Lastkreis auf. Für den Fall, dass mehrere Lastkreise vorhanden sind, ist die Umwälzpumpe bevorzugt dazu vorgesehen, das Fluid durch alle Lastkreise, welche einander parallel geschaltet sind, zu fördern. Um die Förderleistung zu erhöhen, können ggf. mehrere Umwälzpumpen parallel oder in Reihe geschaltet vorgesehen sein, wobei derartige Anordnungen von Umwälzpumpen als eine Umwälzpumpe im Sinne der Erfindung angesehen werden.

Die erfindungsgemäße Verteilereinrichtung weist darüber hinaus eine Vorlauftemperatur-Einstelleinrichtung zum Einstellen der Vorlauftemperatur eines dem zumindest einen Lastkreis zugeführten Fluids auf. Für den Fall, dass mehrere parallel geschaltete Lastkreise vorhanden sind, ist dies die Vorlauftemperatur für sämtliche Lastkreise. Die Vorlauftemperatur-Einstelleinrichtung ist dazu ausgebildet, die Vorlauftemperatur verändern zu können. Die Vorlauftemperatur-Einstelleinrichtung kann dazu einen Wärmetauscher oder eine Mischeinrichtung aufweisen. Erfindungsgemäß ist die Vorlauftemperatur-Einstelleinrichtung mit einer Steuereinrichtung verbunden, welche die Vorlauftemperatur-Einstelleinrichtung ansteuert bzw. regelt. Dabei ist die Steuereinrichtung derart ausgestaltet, dass sie ein Regelungsverfahren zum Einstellen der Vorlauftemperatur gemäß der vorangehenden Beschreibung ausführt, auf welche an dieser Stelle verwiesen wird. D. h. die Steuereinrichtung ist dazu ausgebildet, die Vorlauftemperatur des Fluids in Abhängigkeit der Einschaltdauer eines Lastkreises einzustellen. Dazu ist die Steuereinrichtung mit Erfassungsmitteln versehen, welche die Einschaltdauer bzw. Ein- und Ausschaltzeiten des Lastkreises bzw. der Lastkreise erfassen.

Vorzugsweise dient die Steuereinrichtung gleichzeitig der Ansteuerung der einzelnen Lastkreise und somit sind der Steuereinrichtung durch die von ihr vorgenommene Ansteuerung der Lastkreise die relativen Einschaltdauern bzw. Ein- und Ausschaltzeiten bekannt. Die Steuereinrichtung dient somit bevorzugt auch zum Ein- und Ausschalten der Lastkreise, indem sie Ventile in den einzelnen Lastkreisen öffnet und schließt. Dazu kann die Steuereinrichtung über geeignete Kommunikationsmittel, beispielsweise elektrische Verbindungen oder Funkverbindungen mit Raumthermostaten in dem zu temperierenden Räumen sowie den Ventilen verbunden sein. In Abhängigkeit der erfassten Temperatursignale schaltet die Steuereinrichtung die den jeweiligen Räumen zugeordneten Lastkreise in der oben beschriebenen Weise ein und aus. Die Steuereinrichtung kann darüber hinaus weitere Funktionen, wie beispielsweise die oben beschriebene Volumenstromregelung durch Ansteuerung von Regulierventilen der einzelnen Lastkreise übernehmen. Die Regulierventile können gleichzeitig als Ventile zum Ein- und Ausschalten der Lastkreise dienen. Besonders bevorzugt dient die Steuereinrichtung darüber hinaus zur Steuerung der Umwälzpumpe, d. h. zur Drehzahlsteuerung in der oben genannten Weise. Die gesamte Steuereinrichtung kann in das Umwälzpumpenaggregat, d. h. die Umwälzpumpe bzw. deren Elektronikgehäuse integriert sein.

Besonders bevorzugt weist die Vorlauftemperatur-Einstelleinrichtung eine Mischeinrichtung auf, in welcher dem zumindest einen Lastkreis zugeführtes Fluid mit Fluid aus einem Rücklauf des zumindest einen Lastkreises gemischt wird. Im Falle eines Heizungssystems wird von einer Wärmequelle, wie einem Heizkessel erwärmten Fluid, welches eine zu hohe Temperatur aufweist, kälteres Fluid aus dem Rücklauf zugemischt, um die Temperatur des Fluids auf die gewünschte Vorlauftemperatur zu senken. In einem Kühlsystem kann entsprechend Fluid, welches von einer Kühleinrichtung gekühlt wird und eine Temperatur aufweist, welche geringer als die gewünschte Vorlauftemperatur ist, wärmeres Fluid aus dem Rücklauf zugemischt werden, um die Temperatur des Fluids auf die gewünschte Vorlauftemperatur anzuheben. Durch Veränderung des Zumischungsgrades des Fluids aus dem Rücklauf kann dabei die Temperatur auf einen gewünschten Vorlauftemperatur-Sollwert eingestellt werden. Der Zumischungsgrad kann beispielsweise über ein Regulierventil, wie ein Proportionalventil eingestellt werden, welches von der Steuereinrichtung angesteuert wird.

Die Mischeinrichtung kann dazu in einem Fluidzulauf oder in einer Mischleitung, welche den Rücklauf des Lastkreises bzw. der mehreren Lastkreise mit dem Eingang des zumindest einen Lastkreises bzw. der mehreren Lastkreise verbindet, ein Ventil zum Regulieren des Durchflusses aufweisen, dessen Öffnungsgrad von der Steuereinrichtung einstellbar ist. Dafür ist die Steuereinrichtung mit dem Ventil über entsprechende Kommunikationsmittel, beispielsweise elektrische Steuerleitungen verbunden. Vorzugsweise ist darüber hinaus ein Temperatursensor ausgangsseitig der Mischeinrichtung vorgesehen, welcher die tatsächlich eingestellte Vorlauftemperatur erfasst und der Steuereinrichtung zur Regelung der Mischeinrichtung zurückmeldet.

In dem Fall, dass mehrere Lastkreise vorhanden sind, ist es, wie oben bereits beschrieben, bevorzugt, dass die Vorlauftemperatur-Einstelleinrichtung zum Einstellen der Vorlauftemperatur eines allen Lastkreisen zugeführten Fluids ausgebildet ist. Die Vorlauftemperatur wird dabei auf die Bedürfnisse desjenigen Lastkreises angepasst, welcher den größten Wärmebedarf hat. Dazu ist die Steuereinrichtung so ausgebildet, dass sie in der oben beschriebenen Weise die Vorlauftemperatur in Abhängigkeit der relativen Einschaltdauer desjenigen Lastkreises einstellt, welcher die längsten relativen Einschaltdauern aufweist.

Nachfolgend wird die Erfindung beispielhaft anhand der beigefügten Figuren beschrieben. In diesen zeigt:
- Fig. 1: schematisch ein Heizungs- oder Kühlsystem, in dem das erfindungsgemäße Regelungsverfahren sowie eine erfindungsgemäße Verteiler-Einrichtung zum Einsatz kommen,
- Fig. 2: in einer schematischen perspektivischen Ansicht einer Verteiler-Einrichtung gemäß der Erfindung,
- Fig. 3: eine Draufsicht auf die Verteilereinrichtung gemäß Fig. 2,
- Fig. 4: die Einschaltdauern eines Lastkreises und
- Fig. 5: schematisch das Zusammenwirken einzelner Teile eines erfindungsgemäßen Regelungsverfahrens.

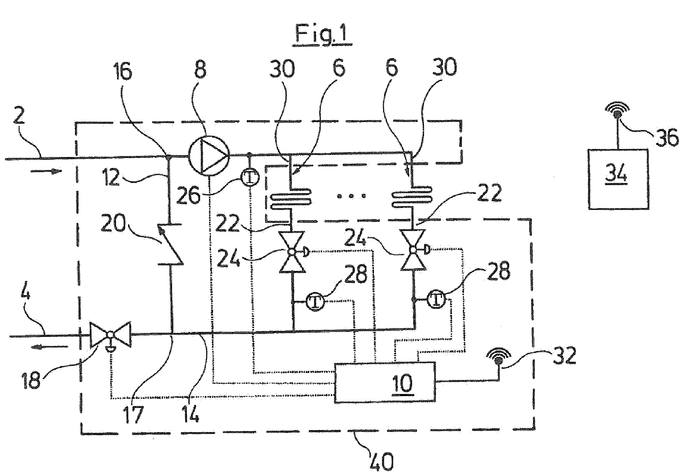

Fig. 1 zeigt ein Heizungs- bzw. Kühlsystem, welches beispielsweise als ein Fußbodenheizungssystem ausgebildet sein kann. Nachfolgend wird die Erfindung am Beispiel eines Heizungssystems beschrieben. Es ist jedoch zu verstehen, dass die Erfindung auch in entsprechender Weise als Kühlsystem verwirklicht werden könnte. Alternativ kann das System auch sowohl zur Heizung als auch zur Kühlung, d. h. beispielsweise im Winter zur Heizung und im Sommer zur Kühlung genutzt werden.

Das in Fig. 1 gezeigte Heizungssystem weist einen Einlass 2 und einen Auslass 4 auf, welche zur Verbindung mit einer Versorgung, d. h. beispielsweise einem Heizkessel, einem Wärmespeicher, einer Kühlanlage etc. vorgesehen sind. Darüber hinaus sind mehrere Lastkreise 6 vorgesehen, welche beispielsweise einzelne Fußbodenheizungskreise darstellen, welche jeweils einen Teilbereich wie z. B. einen Raum eines Gebäudes beheizen. Eingangsseitig, d. h. stromaufwärts der Lastkreise 6 ist eine Umwälzpumpe bzw. ein Umwälzpumpenaggregat 8 angeordnet. Dieses weist einen drehzahlgeregelten Antriebsmotor auf und ist mit einer Steuereinrichtung 10 zur Ansteuerung und insbesondere Drehzahleinstellung verbunden. Die Eingangsseite des Umwälzpumpenaggregates 8 ist mit dem Einlass 2 verbunden.

Stromaufwärts des Umwälzpumpenaggregates 8 ist darüber hinaus eine Mischeinrichtung angeordnet. Die Mischeinrichtung weist eine Mischleitung 12 auf, welche einen Rücklauf 14 von den Lastkreisen 6 mit einem Mischpunkt 16 in dem Strömungsweg von dem Einlass 2 zu der Umwälzpumpe 8 verbindet. D. h. an dem Mischpunkt 16 wird Fluid aus dem Einlass 2 mit Fluid aus dem Rücklauf 14 gemischt, um die Vorlauftemperatur einstellen zu können. Zur Regelung des Mischungsverhältnisses ist in dem Rücklauf 14 stromabwärts des Abzweiges 17 der Mischleitung 12 in dem Rücklauf 14 ein Regulierventil angeordnet, welches ein Mischventil 18 bildet. Dies ist ebenfalls mit der Steuereinrichtung 10 zu seiner Ansteuerung signalverbunden. In der Mischleitung 12 ist darüber hinaus ein Rückschlagventil 20 angeordnet, welches einen Rückfluss von Fluid von dem Mischpunkt 16 in den Rücklauf 14 verhindert. Je nach Öffnungsgrad des Mischventils 18 verändert sich der Volumenstrom, welcher aus dem Rücklauf 14 zu dem Auslass 4 strömt. Wird der Volumenstrom durch Verkleinerung des Öffnungsgrades des Mischventils 18 verkleinert, strömt ein größerer Anteil des Fluids durch die Mischleitung 12 zu dem Mischpunkt 16. Wird der Öffnungsgrad des Mischventils 18 vergrößert, erhöht sich der Volumenstrom durch den Auslass 4 und es strömt entsprechend ein geringerer Teil der Fluidströmung aus dem Rücklauf 14 durch Mischleitung 12 zu dem Mischpunkt 16. So verändert sich der Anteil von Fluid aus dem Rücklauf 14, welcher an dem Mischpunkt 16 dem Fluid aus dem Einlass 2 zugemischt wird. Durch die Mischung des, im Falle eines Heizungssystems, kälteren Fluids aus dem Rücklauf 14 mit dem wärmeren Fluid aus dem Einlass 2, kann die Vorlauftemperatur des Fluids aus dem Einlass 2 gesenkt werden. Im Falle eines Kühlsystems wird umgekehrt wärmeres Fluid aus dem Rücklauf 14 dem kälteren Fluid aus dem Einlass 2 zugemischt, um die Vorlauftemperatur zu erhöhen. Die Umwälzpumpe 8 fördert das Fluid von dem Mischpunkt 16 zu den parallel angeordneten Lastkreisen 6.

An den Ausgängen 22 der Lastkreise, d. h. in deren Rückläufen, ist jeweils ein Regulierventil 24 angeordnet, welches als elektromotorisch angetriebene Regulierventil 24 ausgebildet ist und von der Steuereinrichtung 10 angesteuert wird. Die Regulierventile 24 können in ihrem Öffnungsgrad variiert und auch vollständig geschlossen werden, um den Durchfluss bzw. Volumenstrom durch jeden einzelnen Lastkreis 6 einzustellen. Dabei können die Regulierventile 24 von der Steuereinrichtung 10 individuell angesteuert werden, sodass eine Anpassung des Durchflusses durch jeden einzelnen Lastkreis 6 unabhängig von den übrigen Lastkreisen möglich ist.

In dem gezeigten System sind darüber hinaus Temperatursensoren vorgesehen. Ein erster Temperatursensor ist ein Vorlauftemperatursensor 26 und erfasst die Vorlauftemperatur des Fluids, welches den Lastkreisen 6 zugeführt wird. Darüber hinaus sind an den Ausgängen 22 der Lastkreise 6 Temperatursensoren 28 angeordnet, welche die Austrittstemperaturen des Fluids aus den einzelnen Lastkreisen 6 erfassen. Die von dem Vorlauftemperatursensor 26 und dem Temperatursensoren 28 erfassten Temperaturwerte werden über entsprechende Kommunikationsverbindungen ebenfalls der Steuereinrichtung 10 zugeführt.

Das Umwälzpumpenaggregat 8 ist darüber hinaus ausgebildet, einen Differenzdruck Hₚᵤ zwischen der Eingangsseite und der Ausgangsseite des Umwälzpumpenaggregates 8 zu ermitteln, welcher gleichzeitig dem Differenzdruck zwischen den Eingängen 30 und den Mischpunkt 16, d. h. dem Druckverlust über jeden der durch die Lastkreise 6 definierten Zweige zwischen diesen Punkten entspricht. Ferner ist das Umwälzpumpenaggregat 8 ausgebildet, den Durchfluss durch das Umwälzpumpenaggregat 8 zu bestimmen. Diese vom Umwälzpumpenaggregat 8 erfassten Werte werden über eine Signalverbindung ebenfalls der zentralen Steuereinrichtung 10 zugeführt. Alternativ könnten auch entsprechende Druck- und Durchflusssensoren zusätzlich zu dem Umwälzpumpenaggregat 8 angeordnet werden, um die Druckdifferenz zwischen Ein- und Ausgang der Lastkreise 6 sowie den Durchfluss durch alle Lastkreise 6 zu bestimmen.

Auf Grundlage des Differenzdruckes Hₚᵤ, d. h. dem Druckverlust über den Lastkreisen lässt sich in Kenntnis der Charakteristik der im Strömungsweg liegenden Ventile, insbesondere des Rückschlagventiles 20 und des Regulierventiles 24, darüber hinaus der Volumenstrom durch jeden Lastkreis 6 in Abhängigkeit des Öffnungsgrades des jeweiligen Regulierventiles 24 bestimmen. Da die Steuereinrichtung 10 den Öffnungsgrad der Regulierventile 24 steuert, kann die Steuereinrichtung 10 aus den genannten Werten den Durchfluss bzw. Volumenstrom durch den zugehörigen Lastkreis 6 bestimmen.

So kann, wie unten beschrieben, ein gewünschter Volumenstrom durch den Lastkreis 6 eingestellt werden.

Die Steuereinrichtung 10 ist darüber hinaus mit einer Kommunikationsschnittstelle 32 versehen, welche ausgebildet ist, mit einem oder mehreren Raumthermostaten 34 bzw. Raumtemperaturfühlern 34 zu kommunizieren. Vorzugsweise ist in jedem Raum, welcher von einem Lastkreis 6 temperiert wird, ein solcher Raumthermostat 34 vorgesehen. Im gezeigten Beispiel ist die Kommunikationsschnittstelle 32 als Funkschnittstelle ausgebildet, welche mit einer korrespondieren Funkschnittstelle 36 des Raumthermostates 34 kommuniziert. Alternativ könnte eine Leitungsverbindung über eine separate Signalleitung, ein Bussystem oder eine Powerline-Kommunikation vorgesehen sein. Die Raumthermostate 34 erfassen die Raumtemperaturen in den zu temperierenden Räumen. Darüber hinaus kann über die Raumthermostate 34 in bekannter Weise vom Nutzer jeweils eine Solltemperatur für den zu temperierenden Raum vorgegeben werden.

Die Steuereinrichtung 10 ist zur Anwendung verschiedener Regelungsverfahren ausgebildet. So bewirkt gemäß einem ersten Regelungsverfahren die Steuereinrichtung 10 eine Volumenstromregelung für die einzelnen Lastkreise 6. Dazu wird die Temperaturdifferenz ΔT zwischen dem Eingang 30 und dem Ausgang 22 jedes Lastkreises 6 erfasst. Dies erfolgt über den Vorlauftemperatursensor 26 sowie dem zu dem jeweiligen Lastkreis 6 zugehörigen Temperatursensor 28. In Abhängigkeit dieser Temperaturdifferenz ΔT wird über das Regulierventil 24 dieses Lastkreises 6 der Volumenstrom von der Steuereinrichtung 10 durch Veränderung des Öffnungsgrades V_{pos,n} des Regulierventiles 24 geregelt, bzw. eingestellt, sodass die Temperaturdifferenz ΔT einem vorgegebenen, in der Steuereinrichtung 10 gespeicherten, Sollwert entspricht, d. h., dass ΔT konstant gehalten wird. Dies erfolgt unabhängig für jeden Lastkreis 6, sodass alle Lastkreise durch die Volumenstromregelung an dem tatsächlichen Energiebedarf angepasst werden können. Der Sollwert kann für alle Lastkreise 6 gleich sein oder es können unterschiedliche Sollwerte für einzelne Lastkreise vorgegeben werden. Die Sollwerte sind in der Steuereinrichtung 10 gespeichert.

Dabei wird das Umwälzpumpenaggregat 8 von der Steuereinrichtung 10 so geregelt, dass es einen vorgegebenen Druckdifferenz-Sollwert zwischen Ein- und Ausgang des Umwälzpumpenaggregates einhält. Dieser Differenzdruck wird somit auf einen Druckdifferenz-Sollwert geregelt, welcher ebenfalls von der Steuereinrichtung 10 eingestellt oder vorgegeben wird. Der Druckdiffernez-Sollwert H_{ref} wird von der Steuereinrichtung 10 in Abhängigkeit des Öffnungsgrades der Regulierventile 24 eingestellt. Dazu werden von der Steuereinrichtung 10 sämtliche Öffnungsgrade aller Regulierventile 24 betrachtet. Dasjenige Regulierventil, welches aktuell am weitesten geöffnet ist, d. h. den größten Öffnungsgrad aufweist, wird dann von der Steuereinrichtung 10 der Einstellung des Druckdifferenz-Sollwertes zugrundegelegt. So wird der Öffnungsgrad des Regulierventils, welches am weitesten geöffnet ist, mit einem Soll-Öffnungsgrad V_{pos,ref} verglichen. Wenn der aktuelle Öffnungsgrad V_{pos,n} des Regulierventils 24 mit dem größten Öffnungsgrad den Soll-Öffnungsgrad V_{pos,ref} übersteigt, wird der Druckdifferenz-Sollwert H_{ref} erhöht. Wird der Soll-Öffnungsgrad V_{pos,ref} vom tatsächlichen Öffnungsgrad V_{pos,n} unterschritten, wird der Druckdifferenz-Sollwert H_{ref} entsprechend erniedrigt. Die Erhöhung bzw. Erniedrigung erfolgt bevorzugt proportional zur Abweichung von dem Soll-Öffnungsgrad V_{pos,ref}.

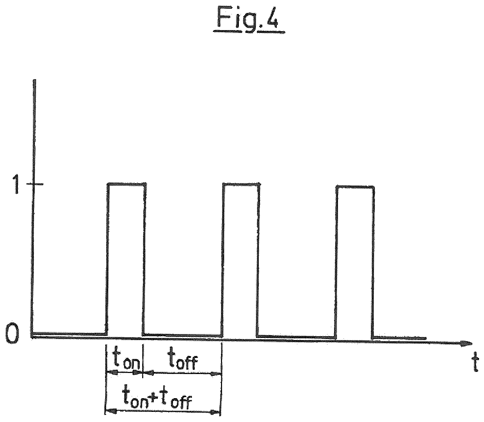

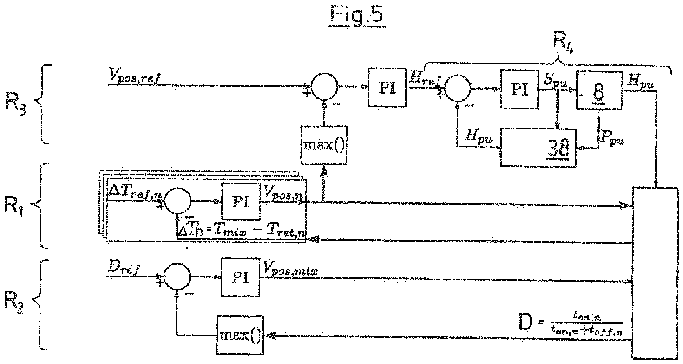

Ein weiterer Regelungskreis bzw. ein weiteres Regelungsverfahren, welches von der Steuereinrichtung 10 durchgeführt wird, betrifft die Regelung der Vorlauftemperatur Tₘᵢₓ am Eingang 30 der Lastkreise 6, welche von dem Vorlauftemperatursensor 26 erfasst wird. Die Vorlauftemperatur Tₘᵢₓ kann von der Steuereinrichtung 10 durch Ansteuerung des Mischventils 18 verändert bzw. eingestellt werden. Dazu bildet die Steuereinrichtung 10 eine Vorlauftemperatur-Einstelleinrichtung, welche die Vorlauftemperatur Tₘᵢₓ, d. h. deren Sollwert, in Abhängigkeit der Einschaltdauer, d. h. der relativen Einschaltdauer D der Lastkreise 6 einstellt. Die Bedeutung der relativen Einschaltdauer D wird anhand von Fig. 4 näher beschrieben. In Fig. 4 ist für einen Lastkreis 4 gezeigt, wie dieser abwechselnd ein- und ausgeschaltet wird. "1" steht dabei für eingeschaltet und "0" für ausgeschaltet. Für die Zeitdauer tₒₙ ist der Lastkreis eingeschaltet, für die Zeitdauer t_{off} ist der Lastkreis ausgeschaltet. Die Zykluszeit t_{z} entspricht dabei der Summe aus Einschaltzeit und Ausschaltzeit, d. h. t_{z} = tₒₙ + t_{off}. Die relative Einschaltdauer D ist das Verhältnis der Einschaltzeit tₒₙ zu der Zykluszeit t_{z}, wie in Fig. 5 dargestellt. Die Zykluszeit bzw. Zyklusdauer t_{z} ist damit die Zeitspanne zwischen dem Einschalten des Lastkreises 6 und dem nachfolgenden nächsten Einschalten des Lastkreises 6. Das Ein- und Ausschalten des Lastkreises ergibt sich aus den Signalen des zugehörigen Raumthermostaten 34. Meldet im Falle eines Heizungssystems der Raumthermostat 34, dass eine eingestellte Soll-Temperatur unterschritten wird, schaltet die Steuereinrichtung 10 den für den Raum zugehörigen Lastkreis 6 durch Öffnen des zugehörigen Regulierventils 24 ein. Dann erfolgt die oben beschriebene Volumenstromregelung für den jeweiligen Lastkreis 6. Meldet der Raumthermostat 34, dass der eingestellte Temperatur-Sollwert erreicht wird, schaltet die Steuereinrichtung 10 den zu diesem Raum zugehörigen Lastkreis 6 durch vollständiges Schließen des Regulierventils 24 ab.

Die Vorlauftemperatur Tₘᵢₓ und deren Sollwert ist für alle Lastkreise 6 gleich und wird von der Steuereinrichtung 10 in Abhängigkeit desjenigen Lastkreises 6 eingestellt, welcher die längste relative Einschaltdauer D, d. h. den relativ größten Lastzyklus aufweist. Dies ist der Lastkreis 6 mit dem größten Wärme- bzw. Kühlbedarf, sodass es zweckmäßig ist, die Vorlauftemperatur Tₘᵢₓ für diesen Lastkreis 6 ausreichend einzustellen. Die übrigen Lastkreise 6, welche geringere relative Einschaltdauern D aufweisen, weisen entsprechend einen geringeren Energiebedarf auf, sodass die eingestellte Vorlauftemperatur Tₘᵢₓ für diese Lastkreise ebenfalls ausreichend ist. Die Einstellung der Vorlauftemperatur Tₘᵢₓ erfolgt in der Weise, dass die relative Einschaltdauer D mit einem Grenzwert bzw. einer Soll-Einschaltdauer D_{ref} verglichen wird. Übersteigt die relative Einschaltdauer D die Soll-Einschaltdauer D_{ref} wird im Falle einer Heizung die Vorlauftemperatur Tₘᵢₓ bzw. zunächst deren Sollwert erhöht und im Fall eines Kühlsystems die Vorlauftemperatur Tₘᵢₓ bzw. deren Sollwert reduziert. Umgekehrt wird für den Fall, dass die relative Einschaltdauer D die Soll-Einschaltdauer D_{ref} unterschreitet, die Vorlauftemperatur Tₘᵢₓ bzw. deren Sollwert im Falle einer Heizung verringert und im Fall eines Kühlsystems erhöht. Dies erfolgt vorzugsweise proportional zu der Abweichung der Einschaltdauer D von der Soll-Einschaltdauer D_{ref}. Alternativ kann auch eine Änderung in festen Schritten erfolgen. Die Soll-Einschaltdauer D_{ref} ist als voreingestellter Wert in der Steuereinrichtung 10 gespeichert.

In Fig. 5 ist gezeigt, wie die einzelnen Regelverfahren bzw. Regelkreise zusammenwirken. Alle die vorangehend beschriebenen Regelkreise bzw. Regelverfahren werden bevorzugt kontinuierlich und gleichzeitig ausgeführt. Die ersten Regelkreise R₁, welche in Fig. 5 gezeigt sind, betreffen die Volumenstromregelung für die einzelnen Lastkreise 6. Dabei erfolgt eine Regelung für jeden Lastkreis 6 unabhängig, d. h. für jeden Lastkreis 6 wird die Differenztemperatur ΔTₙ (ΔTₙ = Tₘᵢₓ - T_{ret,n}, wobei T_{ret,n} die Austrittstemperatur des jeweiligen Lastkreises ist, welche von dem zugehörigen Temperatursensor 28 erfasst wird) mit einem Temperaturdifferenz-Sollwert ΔT_{ref} verglichen. Der Zähler n in Fig. 5 benennt den jeweiligen Lastkreis 6. Auch der Temperaturdifferenz-Sollwert ΔT kann für einzelne Lastkreise 6 unterschiedlich definiert und in der Steuereinrichtung 10 hinterlegt sein. Alternativ ist es auch möglich, für alle Lastkreise denselben Temperaturdifferenzwert ΔT_{ref} zu verwenden. Für die Regelung wird jedoch stets die tatsächliche Austrittstemperatur T_{ret,n} des jeweiligen Lastkreises zugrundegelegt, d. h. für den ersten Lastkreis 6 die Austrittstemperatur Tᵣₑₜ₁, für den zweiten Lastkreis die Austrittstemperatur Tᵣₑₜ₂ usw. In Abhängigkeit des Vergleiches der Differenztemperatur ΔTₙ mit dem Temperaturdifferenz-Sollwert ΔT_{ref} wird der Öffnungsgrad Vp_{os,n} für das zugehörige Regulierventil 24 von der Steuereinrichtung 10 vorgegeben.

Ein zweiter Regelkreis R₂, welcher in Fig. 5 dargestellt ist, betrifft die vorangehend beschriebene Einstellung der Vorlauftemperatur Tₘᵢₓ durch Steuerung des Mischventiles 18. Dazu wird eine Stellgröße V_{pos,mix}, welche den Öffnungsgrad des Mischventiles 18 entspricht, von der Steuereinrichtung 10 vorgegeben, indem in oben beschriebener Weise die relative Einschaltdauer D mit der Soll-Einschaltdauer D_{ref} verglichen wird.

Ein dritter Regelkreis R₃ und ein vierter Regelkreis R₄, welche in Fig. 5 gezeigt sind und in der Steuereinrichtung 10 implementiert sind, betreffen die Differenzdruckregelung in dem Umwälzpumpenaggregat 8. So wird der Differenzdruck Hₚᵤ zwischen Ein- und Ausgang des Umwälzpumpenaggregates 8, d. h. zwischen Ein- und Ausgang der Lastkreise 6 auf einen Druckdifferenz-Sollwert H_{ref} geregelt, was in dem Regelkreis R₄ erfolgt. In dem Regelkreis R3 wird ferner der Druckdifferenz-Sollwert H_{ref} seinerseits geregelt bzw. eingestellt, was in der oben genannten Weise in Abhängigkeit des Öffnungsgrades V_{pos,n} des Regulierventils 24 geschieht. Dazu wird das Regulierventil 24 mit dem größten Öffnungsgrad Vₚₒₛ betrachtet und mit einem Soll-Öffnungsgrad V_{pos,rel} verglichen. Wird der Soll- Öffnungsgrad V_{pos,ref} unterschritten, wird proportional der Druckdifferenz-Sollwert H_{ref} erhöht. Wird der Soll-Öffnungsgrad V_{pos,ref} überschritten, wird entsprechend der Druckdifferenz-Sollwert H_{ref} verringert. Wie in Fig. 5 ebenfalls dargestellt, weist das Umwälzpumpenaggregat 8 eine Erfassungseinrichtung 38 auf, welche aus der Drehzahl Sₚᵤ und der elektrischen Leistung Pₚᵤ die tatsächliche Druckdifferenz Hₚᵤ schätzt bzw. ermittelt.

Die vier gezeigten Regelkreise R₁, R₂, R₃, R₄ sind unterschiedlich schnell bzw. unterschiedlich träge, sodass sie bevorzugt nicht miteinander wechselwirken, d. h. sich gegenseitig nicht beeinflussen. Der schnellste Regelkreis ist der Regelkreis R₄, welcher die Druckdifferenz Hₚᵤ über dem Umwälzpumpenaggregat 8 auf den Druckdifferenz-Sollwert H_{ref} regelt. Der nächstlangsamere Regelkreis ist der Regelkreis R₁, welcher den Volumenstrom durch die einzelnen Lastkreise 6 regelt. Noch langsamer ist der Regelkreis R₃, welcher den Druckdifferenz-Sollwert H_{ref} regelt. Dieser Regelkreis ist so langsam, dass diese Regelung den Regelkreis R₁ bevorzugt nicht beeinflusst. In Fig. 5 nicht dargestellt sind zwei weitere Regelkreise, nämlich der Regelkreis zur Regelung der Raumtemperatur durch Ein- und Ausschalten der Lastkreise 6 sowie der Regelkreis, welcher die Vorlauftemperatur auf dem gewählten Vorlauftemperatur-Sollwert regelt. Diese beiden Regelkreise sind vorzugsweise noch langsamer ausgebildet, als die vorangehend beschriebenen Regelkreise, wobei derjenige Regelkreis, welcher den Vorlauftemperatur-Sollwert einstellt, vorzugsweise der langsamste Regelkreis ist.

Neben den vorangehend beschriebenen Regelungsverfahren kann die Steuereinrichtung 10 weitere Funktionen übernehmen. Da die Steuereinrichtung 10 mit den Raumthermostaten 34 kommuniziert und in Abhängigkeit der Signale von den Raumthermostaten 34 die Lastkreise 6 durch Öffnen der Regulierventile 24 einschaltet, ist es möglich, in der Steuereinrichtung 10 gewisse Prioritäten für einzelne Lastkreise 6 zu hinterlegen. So ist es beispielsweise bei einem Heizungssystem bei großer Kälte möglich, nicht alle Lastkreise 6 gleichzeitig zu aktivieren, falls die von einem Heizkessel zur Verfügung gestellte Wärmemenge dazu nicht ausreichen würde. Zum Aufheizen können zunächst priorisierte Heizkreise, wie beispielsweise für Wohnräume oder Bad eingeschaltet werden und weniger wichtige Lastkreise 6, beispielsweise zum Beheizen von Schlafräumen zunächst ausgeschaltet bleiben. Dabei kann die Steuereinrichtung 10 selbsttätig erfassen, dass die zur Verfügung stehende Heizleistung nicht ausreicht, nämlich dann, wenn alle Regulierventile 34 geöffnet sind, d. h. den maximalen Öffnungsgrad aufweisen und dennoch die Temperaturdifferenz Δ T zwischen Eingang 30 und Ausgang 22 zu groß wird. Umgekehrt funktioniert dies in entsprechender Weise auch bei einem Kühlsystem. Die Priorität der Lastkreise 6 kann voreingestellt und in der Steuereinrichtung 10 hinterlegt sein. Darüber hinaus kann die Steuereinrichtung 10 so ausgebildet sein, dass sie zum Aufheizen von Räumen die Vorlauftemperatur Tₘᵢₓ für eine gewisse Zeit über den üblicherweise gewünschten Sollwert, welcher sich aus der vorangehend beschriebenen Regelung ergibt, erhöht, um ein schnelleres Aufheizen der Räume zu ermöglichen.

Schließlich kann die Steuereinrichtung 10 auch eine Diagnosefunktion bzw. ein Diagnosemodul beinhalten, welches die korrekte Funktion der Regulierventile 24 sowie der Lastkreise 6 diagnostiziert. So kann die Steuereinrichtung 10 in einem Diagnosemodus die Regulierventile 24 der Lastkreise 6 einzeln öffnen bzw. den Öffnungsgrad der Regulierventile 24 vergrößern oder verkleinern, idealerweise auf das Maximum vergrößern. Dabei wird jeweils nur ein Regulierventil 24 ausgehend von einem Ausgangsöffnungsgrad weiter geöffnet oder geschlossen, während die anderen Regulierventile 24 unverändert oder geschlossen bleiben. Bevorzugt wird das Regulierventil 24 des zu überprüfenden Lastkreises 6 weiter geöffnet. Anschließend werden der Durchfluss durch das Umwälzpumpenaggregat 8 sowie der Differenzdruck über dem Umwälzpumpenaggregat 8 erfasst und daraus der hydraulische Widerstand des Systems bzw. eine Änderung des hydraulischen Widerstands bestimmt. Die Steuereinrichtung 10 empfängt auch Informationen bzw. Signale von dem Umwälzpumpenaggregat 8, welche den Durchfluss und den Differenzdruck angegeben. Die Steuereinrichtung 10 vergleicht den ermittelten hydraulischen Widerstand mit einem für das System vorgegebenen und in der Steuereinrichtung 10 gespeicherten maximalen hydraulischen Widerstand. Übersteigt der erfasste hydraulische Widerstand der vorgegebenen maximalen hydraulischen Widerstand, spricht dies für einen Fehler und die Steuereinrichtung 10 signalisiert diesen Fehler, sodass das System anschließend überprüft werden kann. Wenn der hydraulische Widerstand vor und nach dem Öffnen des Regulierventils 24 miteinander verglichen werden, kann darüber hinaus die korrekte Funktion des Regulierventils 24 ermittelt werden. Ferner kann der hydraulische Widerstand in der Steuereinrichtung 10 auch mit einem Minimalwert verglichen werden. Wird ein gespeicherter Minimalwert unterschritten, kann daraus ebenfalls auf eine Fehlfunktion geschlossen werden.

Die beschriebene Diagnosefunktion kann darüber hinaus so verwirklicht sein, dass der Druckverlust und damit der hydraulische Widerstand nur der einzelnen Lastkreise 6 berücksichtigt bzw. von der Steuereinrichtung 10 ermittelt wird. Auch dies kann durch Kenntnis der Charakteristik der im Strömungsweg liegenden Ventile, insbesondere des Rückschlagventils 20 und der Regulierventile 24 unter Berücksichtigung des bekannten Öffnungsgrades der Ventile 24 geschehen. Wenn die Druckverluste der Ventile bei dem gegebenen Betriebszustand bekannt sind, kann so der Anteil des gesamten Druckverlustes, welcher zwischen Ein- und Ausgang der Umwälzpumpe 8 gegeben ist, bestimmt werden, welcher durch den jeweiligen Lastkreis 6 selber verursacht wird. Entsprechend können auch die zulässigen Grenzwerte für den Druckverlust bzw. den hydraulischen Widerstand auf den Lastkreis 6 selber abgestellt werden. D. h. es wird bei dem Vergleich mit den zulässigen Grenzen lediglich der hydraulische Widerstand des Lastkreises berücksichtigt und die Grenzwerte stellen Grenzwerte für den hydraulischen Widerstand des Lastkreises dar.

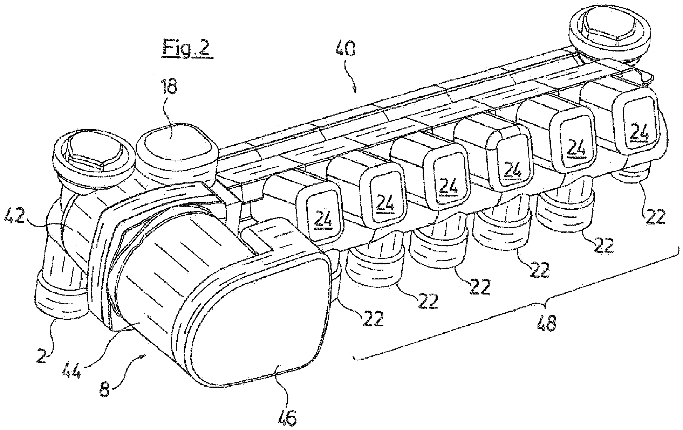

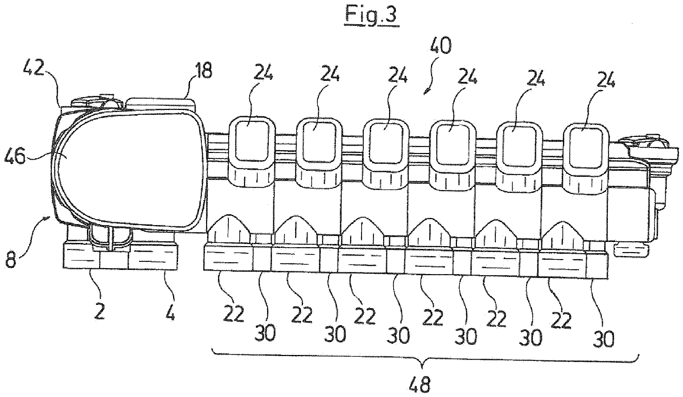

Die wesentlichen Komponenten des in Fig. 1 gezeigten Heizungssystems sind vorzugsweise in eine Verteiler-Einrichtung in Form eines Heizungsverteilers integriert, wie er in Figuren 2 und 3 gezeigt ist. Dabei sind alle wesentlichen innerhalb der gestrichelten Linie in Fig. 1 liegenden Bauteile in die Verteiler-Einrichtung in Form einer Baueinheit integriert. So weist der in Figuren 2 und 3 gezeigte Heizungsverteiler 40 als zentrale Komponente das Umwälzpumpenaggregat 8 auf. Dieses weist ein Pumpengehäuse 42 auf, in welchem ein drehbares Laufrad angeordnet ist. Das Laufrad wird von einem elektrischen Antriebsmotor angetrieben, welcher in einem Motor- bzw. Statorgehäuse 44 angeordnet ist. An dem dem Pumpengehäuse 42 abgewandten Axialende des Statorgehäuse 44 ist ein Klemmenkasten bzw. Elektronikgehäuse 46 angeordnet, in welchem die Steuereinrichtung 10 untergebracht ist. Das Pumpengehäuse 42 weist den Einlass 2 sowie den Auslass 4 in Form von Anschlüssen von externen Rohrleitungen auf. Ferner sind in dem Pumpengehäuse das Mischventil 18 angeordnet und die Mischleitung 12 mit dem Mischpunkt 16 ausgebildet. Das Pumpengehäuse 42 ist an einer Seite mit dem eigentlichen Verteiler 48 verbunden. Der Verteiler 48 weist Module 50 für die einzelnen Lastkreise, in diesem Fall sechs Lastkreise 6, auf. In den Modulen 50 sind die Regulierventile 24 sowie Anschlüsse, welche die Eingänge 30 für die Lastkreise 6 bilden, angeordnet. Ferner weist jedes Modul 50 einen Anschluss auf, welcher den Ausgang 22 für den jeweiligen Lastkreis 6 bildet. An die die Eingänge 30 und die Ausgänge 22 bildenden Anschlüsse können Rohrleitungen, welche die Lastkreise 6 bilden, beispielsweise Rohrleitungen einer Fußbodenheizung angeschlossen werden. In dem Verteiler 48 sind eine Zulauf- und eine Rücklaufleitung angeordnet, welche mit dem Pumpengehäuse 42 verbunden sind, wobei die Rücklaufleitung mit dem Rücklauf 14 in dem Pumpengehäuse und die Zulaufleitung mit der Ausgangsseite der Umwälzpumpe 8 verbunden ist. Auch die Temperatursensoren 26 und 28 sind in den Verteiler 48 bzw. das Pumpengehäuse 42 integriert. So bilden vorzugsweise lediglich die Raumthermostate 34 mit ihren Funkschnittstellen 36 externe Komponenten der Regelungstechnik, welche sich jedoch durch die Funkverbindung leicht mit der ebenfalls in dem Elektronikgehäuse 46 angeordneten Kommunikationsschnittelle 32 der Steuereinrichtung 10 verbinden lassen. Alle anderen erforderlichen elektrischen und/oder elektronischen Bauteile zur Steuerung und/oder Regelung sind in den Heizungsverteiler 40 als eine vorgefertigte Baueinheit integriert.

### Bezugszeichenliste

- 2: - Einlass
- 4: - Auslass
- 6: - Lastkreise
- 8: - Umwälzpumpenaggregat
- 10: - Steuereinrichtung
- 12: - Mischleitung
- 14: - Rücklauf
- 16: - Mischpunkt
- 17: - Abzweig
- 18: - Mischventil
- 20: - Rückschlagventil
- 22: - Ausgänge
- 24: - Regulierventil
- 26: - Vorlauftemperatursensor
- 28: - Temperatursensoren
- 30: - Eingänge
- 32: - Kommunikationsschnittstelle
- 34: - Raumthermostat
- 36: - Funkschnittstelle
- 38: - Erfassungseinrichtung
- 40: - Heizungsverteiler
- 42: - Pumpengehäuse
- 44: - Statorgehäuse
- 46: - Elektronikgehäuse
- 48: - Verteiler

- R₁, R₂, R₃, R₄: - Regelungskreise
- Tₘᵢₓ: - Vorlauftemperatur
- T_{ret,n}: - Austrittstemperatur
- ΔT: - Temperaturdifferenz
- ΔT_{ref}: - Temperaturdifferenz-Sollwert
- Hₚᵤ: - Differenzdruck
- H_{ref}: - Druckdifferenz-Sollwert
- V_{pos,ref}: - Soll-Öffnungsgrad
- V_{pos,mix}-: - Öffnungsgrad des Mischventils 18
- V_{pos,n}: - Öffnungsgrad des Regulierventils 24
- D: - relative Einschaltdauer
- D_{ref}: - Soll-Einschaltdauer
- t_{z}: - Zykluszeit
- tₒₙ: - Einschaltzeit
- t_{off}: - Ausschaltzeit
- Sₚᵤ: - Drehzahl
- Pₚᵤ: - Leistung

## Patentansprüche

1. Regelungsverfahren für ein Heizungs- und/oder Kühlsystem mit zumindest einem Lastkreis(6), durch welchen ein Fluid als Wärmeträger strömt und welcher in Abhängigkeit einer Raumtemperatur in einem von dem Lastkreis(6) zu temperierenden Raum aus- und eingeschaltet wird,
**dadurch gekennzeichnet, dass**
eine Vorlauftemperatur (Tₘᵢₓ) des dem zumindest einen Lastkreis (6) zugeführten Fluids in Abhängigkeit der relativen Einschaltdauer (D) des zumindest einen Lastkreises (6), welche dem Verhältnis der Einschaltdauer zu der Zeitspanne zwischen einem Einschalten des Lastkreises (6) und einem darauf folgenden erneuten Einschalten des Lastkreises (6) entspricht, eingestellt wird.

2. Regelungsverfahren nach Anspruch 1, **dadurch gekennzeichnet, dass** der Lastkreis (6) zum Heizen eines Raumes verwendet wird und die Vorlauftemperatur (Tₘᵢₓ) erhöht wird, wenn die relative Einschaltdauer (D) einen vorgegebenen Grenzwert (D_{ref}) übersteigt und/oder die Vorlauftemperatur (Tₘᵢₓ) gesenkt wird, wenn die Einschaltdauer (D) einen vorgegebenen Grenzwert (D_{ref}) unterschreitet.

3. Regelungsverfahren nach Anspruch 1, **dadurch gekennzeichnet, dass** der Lastkreis (6) zum Kühlen eines Raumes verwendet wird und die Vorlauftemperatur (Tₘᵢₓ) gesenkt wird, wenn die relative Einschaltdauer (D) einen vorgegebenen Grenzwert (D_{ref}) übersteigt und/oder die Vorlauftemperatur (Tₘᵢₓ) erhöht wird, wenn die relative Einschaltdauer (D) einen vorgegebenen Grenzwert (D_{ref}) unterschreitet.

4. Regelungsverfahren nach Anspruch 2 oder 3, **dadurch gekennzeichnet, dass** bei Unter- oder Überschreiten des vorgegebenen Grenzwertes (D_{ref}) die Vorlauftemperatur (Tₘᵢₓ) um einen proportionalen Betrag verändert wird, welcher davon abhängt, wie stark der Grenzwert (D_{ref}) über- oder unterschritten wird.

5. Regelungsverfahren nach einem der vorangehenden Ansprüche, **dadurch gekennzeichnet, dass** zum Einstellen der Vorlauftemperatur (Tₘᵢₓ) eine Mischeinrichtung (12, 16, 18) verwendet wird, in welcher dem zumindest einen Lastkreis (6) zugeführtes Fluid mit Fluid aus einem Rücklauf (14) des zumindest einen Lastkreises (6) gemischt wird.

6. Regelungsverfahren nach einem der vorangehenden Ansprüche, **dadurch gekennzeichnet, dass** mehrere Lastkreise (6) vorhanden sind und zur Einstellung der Vorlauftemperatur (Tₘᵢₓ) eines allen Lastkreisen (6) gemeinsam zugeführten Fluids die relative Einschaltdauer (D) desjenigen Lastkreises zugrundegelegt wird, welcher die längsten relativen Einschaltdauern (D) aufweist.

7. Regelungsverfahren nach einem der vorangehenden Ansprüche, **dadurch gekennzeichnet, dass** in einem von dem Lastkreis (6) zu temperierenden Raum die Raumtemperatur erfasst wird und, wenn die Raumtemperatur einen Temperatur-Sollwert erreicht, der der Lastkreis (6) durch Unterbrechung des Volumenstromes ausgeschaltet wird.

8. Regelungsverfahren nach einem der vorangehenden Ansprüche, **dadurch gekennzeichnet, dass** eine Eingangstemperatur des Fluids an einem Eingang (30) des Lastkreises (6) und eine Austrittstemperatur des Fluids an einem Ausgang (22) des Lastkreises (6) erfasst wird, eine Temperaturdifferenz (ΔT) zwischen der Eingangstemperatur und der Ausgangstemperatur bestimmt wird, und ein Volumenstrom des Fluids durch diesen Lastkreis (6) in Abhängigkeit der Temperaturdifferenz (ΔT) eingestellt wird.

9. Regelungsverfahren nach einem der vorangehenden Ansprüche, **dadurch gekennzeichnet, dass** mehrere Lastkreise (6) und für die mehren Lastkreise (6) eine gemeinsame Umwälzpumpe (8) zum Fördern des Fluids vorhanden sind, wobei die Drehzahl der Umwälzpumpe (8) derart geregelt wird, dass ein Differenzdruck (Hₚᵤ) über der Umwälzpumpe (8) einem vorgegebenen Druckdifferenz-Sollwert (H_{ref}) entspricht.

10. Regelungsverfahren nach Anspruch 9, **dadurch gekennzeichnet, dass** der Druckdifferenz-Sollwert (H_{ref}) für den Differenzdruck (Hₚᵤ) über der Umwälzpumpe (8) in Abhängigkeit des Öffnungsgrades (V_{pos,n}) zumindest eines der Regulierventile (24) zum Einstellen des Volumenstromes in den Lastkreisen (6) eingestellt wird.

11. Regelungsverfahren nach Anspruch 10, **dadurch gekennzeichnet, dass** zur Einstellung des Druckdifferenz-Sollwertes (H_{ref}) für den Differenzdruck (Hₚᵤ) über der Umwälzpumpe (8) dasjenige Regulierventil (24) betrachtet wird, welches am weitesten geöffnet ist, wobei der Öffnungsgrad (V_{pos,n}) dieses Regulierventils (24) mit einem Soll-Öffnungsgrad (V_{pos,ref}) verglichen wird und bei Überschreiten des Soll-Öffnungsgrades (V_{pos,ref}) der Druckdifferenz-Sollwert (H_{ref}) erhöht wird sowie bei Unterschreiten des Soll-Öffnungsgrades (V_{pos,ref}) der Druckdifferenz-Sollwert (H_{ref}) reduziert wird.

12. Verteiler-Einrichtung (40) für ein Heizungs- und/oder Kühlsystem mit zumindest einem Lastkreis (6), wobei die Verteilereinrichtung zumindest eine Umwälzpumpe (8) zum Fördern eines Fluids durch den Lastkreis (6) sowie eine Vorlauftemperatur-Einstelleinrichtung (12, 16, 18) zum Einstellen der Vorlauftemperatur (Tₘᵢₓ) eines dem zumindest einen Lastkreis zugeführten Fluids aufweist, **gekennzeichnet durch** eine mit der Vorlauftemperatur-Einstelleinrichtung verbundene Steuereinrichtung (10), welche derart ausgestaltet ist, dass sie ein Regelungsverfahren zum Einstellen der Vorlauftemperatur (Tₘᵢₓ) gemäß einem der vorangehenden Ansprüche ausführt.

13. Verteiler-Einrichtung nach Anspruch 12, **dadurch gekennzeichnet, dass** die Vorlauftemperatur-Einstelleinrichtung eine Mischeinrichtung /12, 16, 18) aufweist, in welcher dem zumindest einen Lastkreis (6) zugeführtes Fluid mit Fluid aus einem Rücklauf (14) des zumindest einen Lastkreises (6) gemischt wird.

14. Verteiler-Einrichtung nach Anspruch 13, **dadurch gekennzeichnet, dass** die Mischeinrichtung (12, 16, 18) in einem Fluidzulauf oder in einer Mischleitung (12), welche den Rücklauf (14) des Lastkreises mit dem Eingang (30) des zumindest einen Lastkreises verbindet, ein Ventil (18) zum Regulieren des Durchflusses aufweist, dessen Öffnungsgrad (V_{pos,mix}) von der Steuereinrichtung einstellbar ist.

15. Verteiler-Einrichtung nach einem der Ansprüche 12 bis 14, **dadurch gekennzeichnet, dass** mehrere Lastkreise (6) vorhanden sind, wobei die Vorlauftemperatur-Einstelleinrichtung (12, 16, 18) zum Einstellen der Vorlauftemperatur (Tₘᵢₓ) eines allen Lastkreisen (6) zugeführten Fluids ausgebildet ist.

## Claims

1. A regulating method for a heating and/or cooling system with at least one load circuit (6), through which a fluid as a heat transfer medium flows and which is switched on and off in dependence on a room temperature in a room to be thermally regulated by the load circuit (6),
**characterised in that**
a feed temperature (Tₘᵢₓ) of the fluid fed to the at least one load circuit (6) is set in dependence on the relative switch-on duration (D) of the at least one load circuit (6), said relative switch-on duration corresponding to the ratio of the switch-on duration to the time interval between a switching-on of the load circuit (6) and a subsequent, renewed switching-on of the load circuit (6).

2. A regulating method according to claim 1, **characterised in that** the load circuit (6) is used for heating a room and the feed temperature (Tₘᵢₓ) is increased if the relative switch-on duration (D) exceeds a predefined limit value (D_{ref}) and/or the feed temperature (Tₘᵢₓ) is lowered if the switch-on duration (D) falls short of a predefined limit value (D_{ref}).

3. A regulating method according to claim 1, **characterised in that** the load circuit (6) is used for cooling a room and the feed temperature (Tₘᵢₓ) is lowered if the relative switch-on duration (D) exceeds a predefined limit value (D_{ref}), and/or the feed temperature (Tₘᵢₓ) is increased if the relative switch-on duration (D) falls short of a predefined limit value (D_{ref}).

4. A regulating method according to one of the claims 2 or 3, **characterised in that** the feed temperature (Tₘᵢₓ) is changed by a proportional amount on falling short of or exceeding the predefined limit value (D_{ref}), said amount depending on how greatly the limit valve (D_{ref}) is exceeded or fallen short of.

5. A regulating method according to one of the preceding claims, **characterised in that** a mixing device (12, 16, 18) is used for setting the feed temperature (Tₘᵢₓ), in which mixing device fluid fed to the at least one load circuit (6) is mixed with fluid from the return (14) of the at least one load circuit (6).

6. A regulating method according to one of the preceding claims, **characterised in that** several load circuits (6) are present and the relative switch-on duration (D) of that load circuit having the longest relative switch-on durations (D) forms the basis for setting the feed temperature (Tₘᵢₓ) of a fluid commonly fed to all load circuits (6).

7. A regulating method according to one of the preceding claims, **characterised in that** the room temperature is detected in a room to be thermally regulated by the load circuit (6), and the load circuit (6) is switched off by way of interrupting the volume flow if the room temperature reaches a temperature setpoint.

8. A regulating method according to one of the preceding claims, **characterised in that** an entry temperature of the fluid at an entry (30) of the load circuit (6) and an exit temperature of the fluid at an exit (22) of the load circuit (6) are detected, a temperature difference (ΔT) between the entry temperature and the exit temperature is determined, and a volume flow of the fluid through this load circuit (6) is set in dependence on the temperature difference (ΔT).

9. A regulating method according to one of the preceding claims, **characterised in that** several load circuits (6) and a common circulation pump (8) for the several load circuits (6) and for delivering the fluid are present, wherein the speed of the circulation pump (8) is regulated in a manner such that a differential pressure (Hₚᵤ) across the circulation pump (8) corresponds to a predefined pressure difference setpoint (H_{ref}).

10. A regulating method according to claim 9, **characterised in that** the pressure difference setpoint (H_{ref}) for the differential pressure (Hₚᵤ) across the circulation pump (8) is set in dependence on the opening degree (V_{pos,n}) of at least one of the regulating valves (24) for setting the volume flow in the load circuits (6).

11. A regulating method according to claim 10, **characterised in that** for setting the pressure difference setpoint (H_{ref}) for the differential pressure (Hₚᵤ) across the circulation pump (8), it is that regulating valve (24) which is open the furthest which is considered, wherein the opening degree (V_{pos,n}) of this regulating valve (24) is compared to a desired opening degree (V_{pos,ref}), and the pressure difference setpoint (H_{ref}) is increased on exceeding the desired opening degree (V_{pos,ref}), and the pressure difference setpoint (H_{ref}) is reduced on falling short of the desired opening degree (V_{pos,ref}).

12. A manifold device (40) for a heating and/or cooling system with at least one load circuit (6), wherein the manifold device comprises at least one circulation pump (8) for delivering a fluid through the load circuit (6), as well as a feed temperature setting device (12, 16, 18) for setting the feed temperature (Tₘᵢₓ) of a fluid fed to the at least one load circuit, **characterised by** a control device (10) which is connected to the feed temperature setting device and which is designed in a manner such that it carries out a regulating method for setting the feed temperature (Tₘᵢₓ) according to one of the preceding claims.

13. A manifold device according to claim 12, **characterised in that** the feed temperature setting device comprises a mixing device (12, 16, 18), in which fluid fed to the at least one load circuit (6) is mixed with fluid from a return (14) of the at least one load circuit (6).

14. A manifold device according to claim 13, **characterised in that** the mixing device (12, 16, 18) in a fluid feed or in a mixing conduit (12) connecting the return (14) of the load circuit to the entry (30) of the at least one load circuit comprises a valve (18) for regulating the flow, whose opening degree (V_{pos,mix}) is settable by the control device.

15. A manifold device according to one of the claims 12 to 14, **characterised in that** several load circuits (6) are present, wherein the feed temperature setting device (12, 16, 18) is designed for setting the feed temperature (Tₘᵢₓ) of a fluid fed to all load circuits (6).

## Revendications

1. Procédé de régulation pour un système de chauffage et/ou de refroidissement comprenant au moins un circuit de charge (6) par lequel passe un fluide comme caloporteur et qui est fermé ou ouvert en fonction d'une température d'espace dans un espace dont il faut régler la température par le circuit de charge (6),
**caractérisé en ce**
**qu'**il est ajusté une température de départ (Tₘᵢₓ) du fluide acheminé audit au moins un circuit de charge (6) en fonction du temps d'ouverture relatif (D) dudit au moins un circuit de charge (6), lequel temps correspond au rapport entre le temps d'ouverture et le laps de temps entre une ouverture du circuit de charge (6) et une ouverture suivante du circuit de charge (6).

2. Procédé de régulation selon la revendication 1, **caractérisé en ce que** le circuit de charge (6) est utilisé pour chauffer un espace et que la température de départ (Tₘᵢₓ) est augmentée lorsque le temps d'ouverture relatif (D) dépasse une valeur limite de consigne (D_{ref}) et/ou que la température de départ (Tₘᵢₓ) est diminuée lorsque le temps d'ouverture relatif (D) passe en-dessous d'une valeur limite de consigne (D_{ref}).

3. Procédé de régulation selon la revendication 1, **caractérisé en ce que** le circuit de charge (6) est utilisé pour refroidir un espace et que la température de départ (Tₘᵢₓ) est diminuée lorsque le temps d'ouverture relatif (D) dépasse une valeur limite de consigne (D_{ref}) et/ou que la température de départ (Tₘᵢₓ) est augmentée lorsque le temps d'ouverture relatif (D) passe en-dessous d'une valeur limite de consigne (D_{ref}).

4. Procédé de régulation selon la revendication 2 ou 3, **caractérisé en ce que**, en cas de dépassement ou de passage en-dessous de la valeur limite de consigne (D_{ref}), la température de départ (Tₘᵢₓ) est modifiée d'un montant proportionnel qui dépend de la mesure de dépassement ou de passage en-dessous de la valeur limite (D_{ref}).

5. Procédé de régulation selon l'une des revendications précédentes, **caractérisé en ce qu'**il est utilisé, pour ajuster la température de départ (Tₘᵢₓ), un dispositif mélangeur (12, 16, 18) dans lequel est mélangé du fluide acheminé audit au moins un circuit de charge (6) avec du fluide provenant d'un retour (14) dudit au moins un circuit de charge (6).

6. Procédé de régulation selon l'une des revendications précédentes, **caractérisé en ce qu'**il y a plusieurs circuits de charge (6) et **en ce que**, pour l'ajustage de la température de départ (Tₘᵢₓ) d'un fluide commun à tous les circuits de charge (6), il est utilisé le temps d'ouverture relatif (D) de celui des circuits de charge qui présente les temps d'ouverture relatifs (D) les plus longs.

7. Procédé de régulation selon l'une des revendications précédentes, **caractérisé en ce que**, dans un espace dont il faut régler la température par le circuit de charge (6), la température d'espace est captée et, lorsque la température d'espace atteint une valeur de température de consigne, le circuit de charge (6) est fermé par une interruption du flux volumique.

8. Procédé de régulation selon l'une des revendications précédentes, **caractérisé en ce qu'**il est capté la température d'entrée du fluide à une entrée (30) du circuit de charge (6) et une température de sortie du fluide à une sortie (22) du circuit de charge (6), qu'il est déterminé une différence de température (ΔT) entre la température d'entrée et la température de sortie et qu'il est ajusté un flux volumique du fluide passant par ce circuit de charge (6) en fonction de la différence de température (ΔT).

9. Procédé de régulation selon l'une des revendications précédentes, **caractérisé en ce qu'**il y a plusieurs circuits de charge (6) et une pompe de recirculation (8) commune pour lesdits plusieurs circuits de charge (6), la vitesse de rotation de la pompe de recirculation (8) étant régulée de façon qu'une pression différentielle (Hₚᵤ) sur la pompe de recirculation (8) corresponde à une valeur de consigne prédéterminée de différence de pression (H_{ref}).

10. Procédé de régulation selon la revendication 9, **caractérisé en ce que** la valeur de consigne de différence de pression (H_{ref}) pour la pression différentielle (Hₚᵤ) sur la pompe de recirculation (8) est ajustée en fonction du degré d'ouverture (V_{pos,n}) d'au moins une des valves de régulation (24) pour l'ajustage du flux volumique dans les circuits de charge (6).

11. Procédé de régulation selon la revendication 10, **caractérisé en ce que**, pour l'ajustage de la valeur de consigne de différence de pression (H_{ref}) pour la pression différentielle (Hₚᵤ) sur la pompe de recirculation (8), on prend en compte la valve de régulation (24) qui est ouverte le plus, le degré d'ouverture (V_{pos,n}) de cette valve de régulation (24) étant comparé à un degré d'ouverture de consigne (V_{pos,ref}) et la valeur de consigne de différence de pression (H_{ref}) étant augmentée en cas de dépassement du degré d'ouverture de consigne (V_{pos,ref}) et diminuée en cas de passage en-dessous du degré d'ouverture de consigne (V_{pos,ref}).

12. Dispositif de distribution (40) pour un système de chauffage et/ou de refroidissement comprenant au moins un circuit de charge (6), le dispositif de distribution comportant au moins une pompe de recirculation (8) pour transporter un fluide par le circuit de charge (6) ainsi qu'un dispositif d'ajustage de température de départ (12, 16, 18) pour l'ajustage de la température de départ (Tₘᵢₓ) d'un fluide acheminé audit au moins un circuit de charge, **caractérisé par** un dispositif de commande (10) relié au dispositif d'ajustage de température de départ, qui est configuré de façon qu'il mette en oeuvre un procédé de régulation pour ajuster la température de départ (Tₘᵢₓ) selon l'une des revendications précédentes.

13. Dispositif de distribution selon la revendication 12, **caractérisé en ce que** le dispositif d'ajustage de température de départ comprend un dispositif mélangeur (12, 16, 18) dans lequel est mélangé du fluide acheminé audit au moins un circuit de charge (6) avec du fluide provenant d'un retour (14) dudit au moins un circuit de charge (6).

14. Dispositif de distribution selon la revendication 13, **caractérisé en ce que** le dispositif mélangeur (12, 16, 18) comprend, dans une amenée de fluide ou dans un conduit mélangeur (12) qui relie le retour (14) du circuit de charge à l'entrée (30) dudit au moins un circuit de charge, une valve (18) pour réguler le flux dont le degré d'ouverture (V_{pos,mix}) peut être ajusté par le dispositif de commande.

15. Dispositif de distribution selon l'une des revendications 12 à 14, **caractérisé en ce qu'**il y a plusieurs circuits de charge (6), le dispositif d'ajustage de température de départ (12, 16, 18) étant configuré pour l'ajustage de la température de départ (Tₘᵢₓ) d'un fluide acheminé à tous les circuits de charge (6).
